# EUROPÄISCHE PATENTSCHRIFT

(11) **EP 0 915 007 B1**
(45) Veröffentlichungstag und Bekanntmachung des Hinweises auf die Patenterteilung: **17.03.2004**
(21) Anmeldenummer: 98117892.4
(22) Anmeldetag: 22.09.1998
(51) Int. Cl.: B62D 29/00

(54) **Karosseriestruktur mit wenigstens einer Querverbindung**
Body structure comprising at least one transversal wall
Structure de carosserie comportant au moins une cloison transversale

(30) Priorität: 07.11.1997 DE 19749294
(43) Veröffentlichungstag der Anmeldung: 12.05.1999
(73) Patentinhaber: DaimlerChrysler AG, 70567 Stuttgart (DE)
(72) Erfinder: Eipper, Konrad, 72108 Rottenburg (DE); Hicken, Sven, 81827 München (DE); Huschka, Stephan, 73770 Denkendorf (DE)

(56) Entgegenhaltungen:
- EP-A- 0 798 062
- EP-A- 0 900 714
- WO-A-92/03582
- DE-A- 19 509 018
- DE-A- 19 642 821
- DE-C- 4 430 920
- FR-A- 2 657 319
- US-A- 3 790 365

## Beschreibung

Die Erfindung betrifft eine selbsttragende Karosseriestruktur für ein Kraftfahrzeug der im Oberbegriff von Anspruch 1 angegebenen Art.

Eine derartige Karosseriestruktur mit einem einstückigen, formstabilen Leichtmetallschaumkörper als tragende Karosseriewand ist aus der europäischen Patentanmeldung EP 0 798 062 A2 bereits bekannt. Das leichte aber sehr steife Wandbauteil kann dabei als tragendes Strukturbauteil der Karosserie, als Verkleidungsteil oder auch als Abschirmteil genutzt werden. Zur Nutzung des Wandbauteils als tragendes Strukturbauteil wird beispielhaft die Verwendung als hintere, an den Kofferraum angrenzende Querwand eines Fahrzeugs vorgeschlagen, wobei die aufgeschäumte Schicht eine beidseitige Plattierung mit massiven Metallblechen aufweisen kann. Ferner wird die Nutzung des Wandbauteils als Karosserieinnenblech, als Spritzwand, als Abtrennwand gegenüber Motor- oder Kofferraum oder zur crashsichernden und aussteifenden Funktion innerhalb der Karosserie vorgeschlagen.

Aus der Offenlegungsschrift DE 196 42 821 A1 ist ein Verfahren zum Herstellen einer Aufbaustruktur für ein Fahrzeug, insbesondere Cabriolet bekannt. Dabei wird ein Teil der Aufbaustruktur, beispielsweise ein Rückwandmodul aus der Rohbaufertigung herausgelöst und ein vorgefertigtes, leicht montierbares Modul gebildet. Das vorgefertigte Modul kann in Leichtmetallbauweise oder einstückig aus Kunststoff hergestellt werden.

Aus der Veröffentlichungsschrift WO 92/03582 A ist ein Leichtmetall-Gas-Verbundwerkstoff und ein Verfahren zu dessen Herstellung bekannt. Der Verbund besitzt kleine, freistehende Poren, die ermöglichen, dass der Verbund verfestigt und wieder geschmolzen werden kann, ohne dass seine Struktur zusammenbricht.

Aus der europäischen Patentanmeldung EP 0 900 714 A1 ist ein Fahrzeug mit einem zu öffnenden Verdeck bekannt, bei dem für flächige Teile der Bodenanlage, eine Stirnwand oder für Seitenwandbereiche des Wagenkastens Leichtbauplatten in Sandwichbauweise vorgesehen sind. Die Leichtbauplatten besitzen zwei Deckbleche sowie einen zwischen den Deckblechen liegenden Kern aus Aluminiumschaum.

Aus der US-Patentschrift US 3,790,365 ist ein Verfahren zur Herstellung von Metallschäumen bekannt, bei dem das Ausgangsmaterial mehrmals hintereinander expandiert wird.

Aus der Offenlegungsschrift DE 195 09 018 A1 sind ein Verfahren zum Herstellen von leichten und steifen Verbundteilen und nach diesem Verfahren hergestellte Teile bekannt. Das Verbundteil besteht aus einem Formteil bzw. Formkörper aus Polyurethan-Hartschaum oder Leichtmetallschaum und einer Blechhülle, die das Formteil fest und ohne Zwischenräume umgibt.

Aus der Ottenlegungsschrift DE 43 16 540 A1 sind Verbundbauteile bekannt, die aus einem tragenden Aluminiumblech und einer Aluminiumschaumschicht zur ergänzenden Stützung des Blechs bestehen. Als spezielle Ausführungsform ist eine Trennwand zwischen Motor- und Insassenraum vorgesehen, wobei dem Metallschaum vorwiegend Schallabsorptionsaufgaben zugewiesen werden.

Aus der Patentschrift FR 2 657 319 ist eine nicht tragende Zwischenwand in einer Kraftfahrzeugkarosserie bekannt, die einseitig mit einer Schaumstofflage überzogen ist.

Ebenso ist aus der Patentschrift DE 44 30 920 C1 eine Querverbindung in einer Kraftfahrzeugkarosserie in Form einer Fahrgastzellenstirnwand bekannt. Sie besteht im wesentlichen aus einem in Fahrzeugquerrichtung angeordneten, gewölbten Blechprofil, auf das ein an die Form des Blechprofils angepasster Formkörper aus einem Leichtmetallschaum , insbesondere aus Aluminiumschaum, aufgesetzt ist.

Aus dem Gebrauchsmuster DE 87 06 593 U1 ist ein Versteifungselement für eine Kraftfahrzeugkarosserie bekannt, das als in Querrichtung der Karosserie angeordnetes Hohlprofil, insbesondere aus Metallblech oder faserverstärktem Kunststoff hergestellt, ausgeführt ist. Der Hohlraum des Versteifungselementes ist mit einem Blähton/Kunstharz-Stützkern gefüllt, der sowohl zur Festigkeitserhöhung als auch zur Vermeidung von Korrosion und zur Verbesserung des Schwingungsverhaltens bei einem derartigen Versteifungselement dient.
Aus der Patentschrift DE 195 46 352 A1 ist ein Stoßdämpferelement in einer Rahmenkonstruktion einer Kraftfahrzeugkarosserie bekann, das in ein hohl gestaltetes Längsträgerelement, insbesondere ein Aluminiumprofil eingesetzt ist. Ein derartiges Stoßdämpferelement ist entweder in dem Längsträgerelement oder in einer separaten Form aufgeschäumt und in beiden Fällen als kompakter Block exakt in das Längsträgerelement eingepasst.

Ferner ist aus der US-Patentschrift 3,834,881 ein flächiges Metallschaum-Halbzeug bekannt, bei dem quer zur vorgesehenen Hauptbelastungsrichtung Zwischenlagen aus Metall, Kunststoff oder Papier in den Metallschaum eingefügt sind. Dadurch soll bei Druckbelastung eine stärkere Verformung eines Bauteils aus einem derartigen Werkstoff erreicht werden. Insbesondere bei spröden Legierungen sollen zudem Scherbrüche vermieden werden.

Aus der Offenlegungsschrift DE 42 43 186 A1 ist eine modular aufgebaute Kraftfahrzeugkarosserie bekannt, die ein Fahrgastzellenmodul aufweist, welches einstückig als Großpressteil, vorzugsweise aus einem glasfaserverstärkten Polyesterharz, hergestellt ist.

Aufgabe der Erfindung ist es, eine selbsttragende Karosseriestruktur der im Oberbegriff des Anspruchs 1 angegebenen Artdahingehend weiterzubilden, dass die einen Schaumkörper aufweisende Querverbindung bei Aufrechterhaltung ihrer versteifenden Wirkung für die Karosserie als Begrenzungswand zum Kraftfahrzeuginsassenraum mit geringem Platzbedarf nahe einem Kraftstofftank angeordnet werden kann.

Die Lösung dieser Aufgabe ergibt sich aus den Merkmalen von Anspruch 1. Der Platzbedarf der Querverbindung ist dabei gering, weil sie als Kraftstofftankabdeckung unter Anpassung an die Form des Kraftstofftanks gestaltet worden ist. Die Anbindung der Querverbindung an die karosseriesstruktur erfolgt auf einfache Weise über einen Rahmen.

Weitere Vorteile und Merkmale der Erfindung ergeben sich aus den übrigen Ansprüchen.

In Ausgestaltung der Erfindung besteht der Rahmen der Querverbindung vorzugsweise aus dem gleichen Material wie der Schaumkörper.

Zur Befestigung der Querverbindung an der Karosseriestruktur weist der Rahmen wenigstens einen Befestigungsabschnitt für eine lösbare oder unlösbare Montage an der Karosseriestruktur auf. Dadurch lässt sich die Querverbindung mit Hilfe des Rahmens besonders einfach an der Karosseriestruktur befestigen, so dass kein gesonderter Befestigungsabschnitt als Bestandteil des Schaumkörpers vorgesehen werden muss.

In weiterer Ausgestaltung der Erfindung ist die Querverbindung mit wenigstens einer nicht-tragenden Deckschicht, insbesondere aus dem Material des Schaumkörpers, versehen. Durch eine derartige Deckschicht kann die Querverbindung beliebigen Oberflächenanforderungen angepasst werden, wobei die Herstellung der Deckschicht aus dem Material des Schaumkörpers eine besonders günstige Fügesituation zwischen dem Schaumkörper und der Deckschicht ergibt.

Nachfolgend ist ein bevorzugtes Ausführungsbeispiel der Erfindung anhand der Zeichnungen näher erläutert.
- Fig. 1: zeigt eine Karosseriestruktur mit einer erfindungsgemäßen Querwand zwischen Kofferraum und Kraftfahrzeuginsassenraum,
- Fig. 2: eine erfindungsgemäße Querverbindung in Form einer Querwand im Detail und
- Fig. 3: eine Querwand gemäß Fig. 2, die in einen Befestigungsrahmen eingesetzt ist.

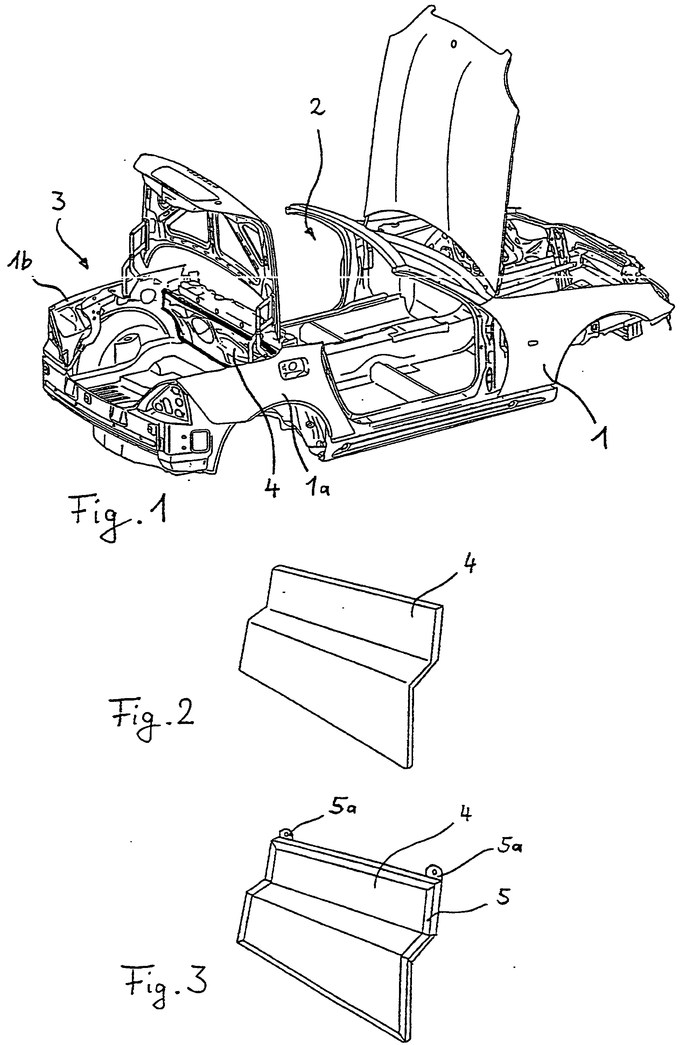

In Fig. 1 ist eine Karosseriestruktur 1 für ein offenes Kraftfahrzeug dargestellt, die einen als Kraftfahrzeuginsassenraum 2 und einen als Kofferraum 3 ausgebildeten Karosseriebereich aufweist. Diese beiden Karosseriebereiche werden durch eine Querverbindung zwischen den beiden Karosserieseitenwänden 1a und 1b in Form einer Querwand 4 voneinander getrennt. Die Querwand 4 ist einstückig aus Aluminiumschaum hergestellt und weist eine Breite auf, die in etwa dem Zwischenraum zwischen den beiden Seitenwänden 1a und 1b entspricht. Die Querwand 4 ist ferner mit Hilfe eine= nicht dargestellten Halterung jeweils fest mit den Seitenwänden 1a und 1b verbunden. Dadurch ergibt sich eine verbindungssteife Verbindung zwischen den beiden Seitenteilen. In gleicher Weise ist die erfindungsgemäße Karosseriestruktur auch bei geschlossenen Personenkraftwagen einsetzbar.

In Fig. 2 ist die genannte Querwand nochmals schematisch dargestellt, wobei angedeutet ist, daß die Querwand 4 nicht nur als ebene Platte, sondern auch in einer komplizierteren Raumform ausführbar ist. In dem vorliegenden Ausführungsbeispiel bildet die Querwand 4 nicht nur eine Querverbindung zur Versteifung der Karosseriestruktur 1, sondern auch eine rückseitige Wandung für den Kraftfahrzeuginsassenraum 2 und eine rückseitige Abdeckung für einen nicht dargestellten Kraftstofftank des Kraftfahrzeuges. Daher weist die Querwand 4 nicht näher dargestellte Ausbuchtungen und Rücksprünge auf, die zum einen an das Volumen des Kraftstofftanks und zum anderen die Sicherheitserfordernisse im Kraftfahrzeug angepaßt sind. Dabei wird insbesondere der Versteifung der Karosseriestruktur 1 in Querrichtung und der Abdekkung des Kraftstofftanks sowie des Kraftfahrzeuginsassenraums nach hinten besonders Rechnung getragen. Dabei erweist es sich als besonders vorteilhaft, daß die Querwand 4 aus dem Leichtmetallschaum in eine nahezu beliebige gewünschte Form zu schäumen ist, wobei durch das pulver- oder schmelzmetallurgische Herstellverfahren der Schaumstruktur der Querwand 4 eine Außenoberfläche erreichbar ist, die weitgehend geschlossene Schaumporen aufweist, so daß eine Verwendung von zusätzlichen Deckschichten nicht erforderlich ist.

Im Fall eines Seitenaufpralls absorbiert die Querwand 4 Aufprallenergie durch Verformung ebenso wie sie im Fall eines Frontalaufpralls durch den Kofferraum nach vorn geschleuderte Gegenstände auffängt und deren Bewegungsenergie durch Verformung absorbiert.

Ein modifiziertes Ausführungsbeispiel einer erfindungsgemäßen Querverbindung ist in Fig. 3 dargestellt. Dabei weist eine einstückig aus Aluminiumschaum hergestellte Querwand 4 einen Halterahmen 5 auf, in den die Querwand 4 formschlüssig eingesetzt ist, und über den die Querwand 4 besonders einfach mit der Karosseriestruktur 1 verbunden werden kann. Dazu weist der Halterahmen 5 Befestigungslaschen 5a auf, die jeweils von einem Bolzenelement zur lösbaren formschlüssigen Montage an der Karosseriestruktur 1 durchsetzt werden.

In einem nicht dargestellten Ausführungsbeispiel ist eine Querverbindung aus einem Leichtmetall- oder Kunststoffschaum konzipiert, in der mehrere Befestigungselemente in Form von Montagebuchsen durch Umschäumen integriert sind. Derartige Montagebuchsen werden bereits bei der Herstellung der Querverbindung unlösbar und formschlüssig umschäumt, wobei der freie Buchsenquerschnitt selbstverständlich zugänglich bleibt. In die Montagebuchsen sind Befestigungsschrauben oder -bolzen einbringbar, so daß hohe Momente an der jeweiligen Schraubstelle der Querverbindung trotz der Herstellung als Schaumteil aufgebracht werden können.

In einem weiteren nicht dargestellten Ausführungsbeispiel ist eine ähnliche Querwand als Hutablage ausgeführt und weist auf ihrer von außen sichtbaren Oberfläche eine zusätzliche Deckschicht aus einer Aluminiumfolie auf. Eine derartige Deckschicht ergibt eine gefälligere Oberfläche und kann in modifizierter Weise auch aus Kunststoff oder jedem anderen Material ausgeführt sein. Der Vorteil einer Deckschicht aus demselben Material wie die geschäumte Querwand besteht darin, daß das somit geschaffene Verbundbauteil ohne größeren Aufwand in den Wertstoffkreislauf rückgeführt werden kann. Dies ist auch bei einer Querwand 4 von Bedeutung, die möglichst in einen Halterahmen 5 aus demselben Material einzusetzen ist.

Es versteht sich von selbst, daß als Bestandteile einer in der erfindungsgemäßen Karosseriestruktur enthaltenen Querverbindung auch einstückig angeschäumte Befestigungslaschen sowie integrierte Verstärkungsabschnitte vorsehbar sind. Darüber hinaus ist eine Herstellung aus jedem schäumbaren Material möglich, wobei Metallschäume wegen ihrer günstigeren Festigkeitseigenschaften gegenüber Kunststoffschäumen zu bevorzugen sind. Ferner sind beliebige nicht-tragende Deckschichten aus beliebigen Material auf eine derartige Querverbindung aufzubringen, ohne daß sich solche Querverbindungen von der erfindungsgemäßen Karosseriestruktur entfernen.

## Patentansprüche

1. Selbsttragende Karosseriestruktur (1) für ein Kraftfahrzeug mit wenigstens einer Querverbindung (4) zur Versteifung der Karosseriestruktur, die als flächige Querwand mit Energieabsorptionsvermögen in Fahrzeuglängsrichtung aus einem einstückigen, formstabilen Leichtmetall- oder Kunststoffschaumkörper hergestellt ist und sich als Trennwand für einen Kofferraum (3) über die gesamte Breite der Karosseriestruktur (1) erstreckt,
**dadurch gekennzeichnet, dass** die Querverbindung (4) eine rückseitige Abdeckung für einen Kraftstofftank bildet und als Kraftstofftankabdeckung in Fahrzeuglängs- und -hochrichtung verlaufend gestaltet ist, wobei sie durch Ausbuchtungen und Rücksprünge an das Volumen der Kraftstofftanks angepaßt ist, und dass die Querverbindung (4) in einen, insbesondere aus dem Material der Querverbindung hergestellten, Rahmen (5) zur Fixierung an der Karosseriestruktur (1) eingesetzt ist.

2. Karosseriestruktur nach Anspruch 1,
**dadurch gekennzeichnet, dass** der Rahmen (5) wenigstens einen Befestigungsabschnitt (5a) für eine lösbare oder unlösbare Montage an der Karosseriestruktur aufweist.

3. Karosseriestruktur nach Anspruch 1 oder 2,
**dadurch gekennzeichnet, dass** die Querverbindung (4) mit wenigstens einer nicht-tragenden Deckschicht, insbesondere aus dem Material der Querverbindung versehen ist.

4. Karosseriestruktur nach einem der Ansprüche 1 bis 3,
**dadurch gekennzeichnet, dass** in die Querverbindung wenigstens ein Befestigungselement, insbesondere eine Befestigungsbuchse, durch Umschäumen integriert ist.

## Claims

1. Self-supporting body structure (1) for a motor vehicle with at least one transverse bracing member (4) to stiffen the body structure, which is made as an extensive transverse partition wall with energy absorption capacity in the longitudinal direction of the vehicle, from a one-piece, inherently stable light metal or plastic foam body, and extends as a partition wall for a luggage compartment (3) across the full width of the body structure (1),
**characterised in that**
the transverse bracing member (4) forms a rear cover for a fuel tank and is designed as a fuel tank cover extending in the longitudinal and height direction of the vehicle, being adapted to the volume of the fuel tank by virtue of salients and recesses, and the transverse bracing member (4) is held in a frame (5) for fixing it to the body structure (1), in particular a frame made from the same material as the transverse bracing member.

2. Body structure according to Claim 1,
**characterised in that**
the frame (5) has at least one attachment section (5a) to enable detachable or permanent mounting on the body structure.

3. Body structure according to Claims 1 or 2,
**characterised in that**
the transverse bracing member (4) is provided with at least one non load-bearing covering layer, in particular made of the same material as the transverse bracing member.

4. Body structure according to any of Claims 1 to 3,
**characterised in that**
at least one attachment element, in particular an attachment bush, is integrated in the transverse bracing member by being surrounded by foam.

## Revendications

1. Structure de carrosserie (1) autoporteuse, pour un véhicule automobile, comprenant au moins une liaison transversale (4) dans le but de rigidifier la structure de carrosserie, qui est produite sous la forme de paroi transversale plate à pouvoir d'absorption d'énergie dans la direction longitudinale du véhicule, à partir d'un corps alvéolaire, en métal léger ou en matière synthétique, à forme stable, monobloc, et qui s'étend sous forme de paroi de séparation pour un coffre à bagage (3), sur toute la largeur de la structure de carrosserie (1), **caractérisée en ce que** la liaison transversale (4) forme un recouvrement arrière d'un réservoir de carburant et est configurée en tant que recouvrement de réservoir à carburant, s'étendant dans la direction longitudinale et la hauteur du véhicule, où, grâce à des bosses sortantes et à des retraits, elle est adaptée au volume du réservoir à carburant, et **en ce que** la liaison transversale (4) est insérée dans un cadre (5), en particulier fabriqué à partir du matériau utilisé pour la liaison transversale, pour fixation à la structure de carrosserie (1).

2. Structure de carrosserie selon la revendication 1, **caractérisée en ce que** le cadre (5) présente au moins un tronçon de fixation (5a) pour un montage, à possibilité de désolidarisation ou non, sur la structure de carrosserie.

3. Structure de carrosserie selon la revendication 1 ou 2, **caractérisée en ce que** la liaison transversale (4) est munie d'au moins une couche de couverture non porteuse, en particulier formée du matériau utilisé pour la liaison transversale.

4. Structure de carrosserie selon l'une des revendications 1 à 3, **caractérisée en ce que**, dans la liaison transversale, est intégré au moins un élément de fixation, en particulier une douille de fixation, par un enrobage par un matériau alvéolaire.
